# EUROPEAN PATENT APPLICATION

(11) **EP 4 817 796 A1**
(43) Date of publication of application: **07.10.2026**
(21) Application number: 25187382.4
(22) Date of filing: 03.07.2025
(51) Int. Cl.: B25B 23/12, B23P 19/00

(54) **ELECTROMAGNETIC NUT FEEDING GUN**

(30) Priority: 03.04.2025 CN 202510416814
(71) Applicant: Shenzhen Shenlichang Electronics Co., Ltd., Shenzhen City, Guangdong Province 518000 (CN)
(72) Inventor: Wang, Xi, Shenzhen City, Guangdong Province, 518000 (CN)
(74) Representative: Cabinet Chaillot

(57) **Abstract**

An electromagnetic nut feeding gun is provided, comprising a receiving seat assembly connected at its rear to a connector assembly that houses an electromagnetic coil. A push rod assembly, including a protective sleeve and a push rod positioned inside, is connected to the rear of the connector assembly. A cylinder is connected to the rear of the push rod assembly, with its piston driving the push rod so that its top end can reach into the receiving seat assembly. The nut is attracted and guided by electromagnetic force, addressing the issue in traditional nut feeding guns where nuts pushed by a cylinder often fail to reach the target position due to inertia. The design further prevents nut retraction caused by variations in welded materials and avoids permanent magnetization of the push rod. It enhances delivery accuracy and speed, enabling precise nut placement at various angles and improving performance in both automated and manual applications.

## Description

### TECHNICAL FIELD

The present invention relates to the field of automation technology, and more particularly, to an electromagnetic nut feeding gun.

### BACKGROUND ART

With the continuous development of industrial technology, automation has gradually replaced manual operations, significantly improving production efficiency and reducing costs. Among automated tools, the nut feeding gun plays an important role in improving the process of manually placing nuts.

Traditional nut feeding guns rely primarily on a cylinder to push the nut using inertia. A single electromagnetic coil is used to send the nut to a predetermined position. However, due to variations in air pressure, welding materials, and permanent magnetization of the push rod, the nut often fails to reach the intended location. Therefore, the present invention provides an electromagnetic nut feeding gun to at least partially address these potential problems in the prior art.

### SUMMARY OF THE INVENTION

In view of the above problems, embodiments of the present invention are proposed to provide an electromagnetic nut feeding gun capable of overcoming or at least partially addressing the aforementioned issues.

To solve the above problems, the present invention discloses an electromagnetic nut feeding gun, comprising:
a receiving seat assembly, with a rear end connected to a connector assembly;
the connector assembly having a first coil and a second coil arranged side by side therein, wherein the first coil and the second coil generate opposite magnetic fields when energized;
a push rod assembly connected to the rear end of the connector assembly, the push rod assembly comprising a push rod protective sleeve and a push rod disposed therein;
a cylinder connected to a rear end of the push rod assembly, a piston of the cylinder being connected to the push rod such that a top end of the push rod is extendable to a position outside the receiving seat assembly;
wherein the push rod passes through a magnetic field formed by the first coil and the second coil during its reciprocating movement.

Optionally, the first coil and the second coil are electromagnetic coils of the same specification; and wherein at least a top portion of the push rod is made of a material with a coercivity less than or equal to 300 kA/m, and an outer diameter of the top portion of the push rod is not greater than an inner diameter of a nut to be delivered.

Optionally, a wear-resistant copper sleeve is disposed inside the connector assembly between the electromagnetic coils and the receiving seat assembly.

Optionally, a wiring box is disposed outside the connector assembly, and electrodes of the first and second coils extend into the wiring box.

Optionally, a rotatably adjustable gun support is sleeved on an outer periphery of the push rod assembly.

Optionally, a material tube bracket is disposed between the push rod assembly and the cylinder.

Optionally, a cylinder buffer sleeve is provided at a connection portion between the cylinder and the push rod assembly and is disposed inside the push rod assembly.

Optionally, a front end of the receiving seat assembly is provided with a blocking door; and a return spring is connected to the blocking door.

The above embodiments have the following advantages:
The present invention provides a structure wherein the receiving seat assembly is connected at the rear to a connector assembly housing an electromagnetic coil. A push rod assembly, including a protective sleeve and a push rod, is connected to the rear end of the connector assembly, and a cylinder is connected to the rear of the push rod assembly. The piston of the cylinder drives the push rod so that its top end can reach into the receiving seat assembly. When the cylinder extends the push rod, the first electromagnetic coil is energized to generate electromagnetic force to attract the nut. After reaching the predetermined position, the first coil is de-energized and the second coil is activated, using a reverse magnetic field to actively and accurately eject the nut. This design overcomes the limitations of conventional nut feeding guns that rely solely on the push rod's inertia to deliver nuts, which often results in inaccurate positioning. It also addresses the drawbacks of single-coil systems, such as the inability to demagnetize the push rod, which can lead to permanent magnetization and the issue of nuts being pulled back when encountering magnetic repulsion from certain workpieces. Furthermore, it improves delivery angle and speed. Nuts can be accurately delivered to predetermined positions (e.g., positioning pins) at 0-90° or even 0°, compared to traditional systems limited to 35-70°. This is essential for stable operation in nut spot welding robot workstations. Additionally, in manual lines, the enhanced speed can increase productivity. Magnetic sensors (1-N) can also be added to the cylinder for safe delivery, ensuring that even in the event of cylinder failure, the push rod will not be damaged.

### BRIEF DESCRIPTION OF THE DRAWINGS

Fig. 1 is a cross-sectional structural schematic diagram of an embodiment of the electromagnetic nut feeding gun according to the present invention.
Fig. 2 is a structural schematic diagram of an embodiment of the electromagnetic nut feeding gun according to the present invention.

The reference numerals in the drawings are described as follows:
1 - Receiving seat assembly
2 - Connector assembly
3 - Push rod assembly
4 - Cylinder
5 - Gun support
6 - Material tube bracket
101 - Blocking door
201 - Wiring box
202 - Wear-resistant copper sleeve
203 - First coil
204 - Second coil
301 - Push rod protective sleeve
302 - Push rod
303 - Push rod buffer sleeve
401 - Cylinder buffer sleeve.

### DETAILED DESCRIPTION

To make the objectives, features, and advantages of the present invention more apparent and understandable, the invention will be described in further detail below with reference to the accompanying drawings and a specific embodiment.

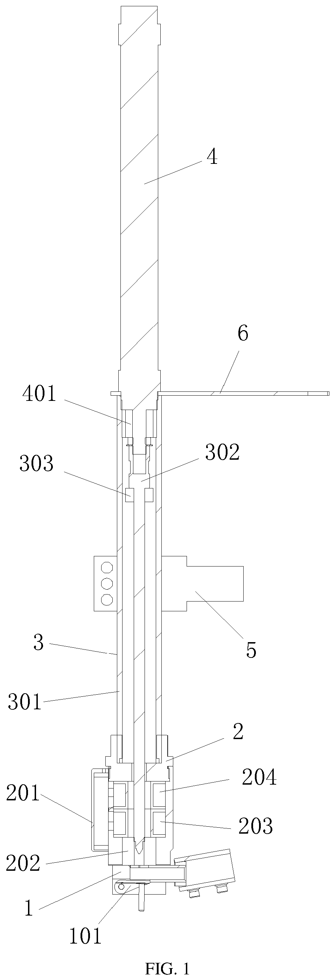

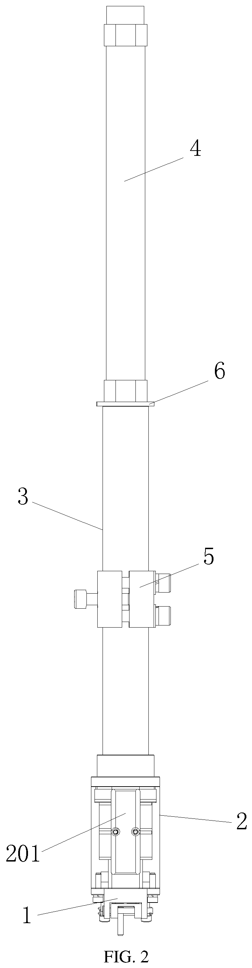

Referring to Figs. 1 and 2, a structural schematic of an embodiment of the electromagnetic nut feeding gun of the present invention is shown. The device includes:
a receiving seat assembly 1, with its rear end connected to a connector assembly 2; the connector assembly 2 contains two electromagnetic coils, namely a first coil 203 and a second coil 204, arranged side by side. When both coils are energized, they generate opposite magnetic fields;
a push rod assembly 3 is connected to the rear end of the connector assembly 2. The push rod assembly 3 includes a push rod protective sleeve 301 and a push rod 302 disposed within the sleeve 301;
the rear end of the push rod assembly 3 is connected to a cylinder 4. A piston of the cylinder 4 is connected to the push rod 302, allowing the top of the push rod 302 to extend outside the receiving seat assembly 1 to reach a target nut delivery position;
during extension and retraction, the push rod 302 passes through the magnetic field formed by the first coil 203 and the second coil 204.

This nut feeding gun, through its dual electromagnetic coil design, enhances the metal nut's adsorption capability via electromagnetic force. It addresses the problem found in traditional nut feeding guns where the nut is pushed solely by a cylinder rod and then moves by inertia to a designated position, often failing to reach it accurately.

By introducing two electromagnetic coils capable of generating opposing magnetic fields, the invention ensures better control. The two coils may have opposite winding directions or be wound in the same direction with reverse electrical connections, thereby generating opposite magnetic fields. Specifically, each of the coils 203 and 204 is electrically connected to a control element, such as a relay, which controls the energizing process. The control element may be, but is not limited to, a relay; it can also be an optocoupler, MOSFET, transistor, or a combination of such components, integrated into a control board.

During operation, the nut feeding gun is managed by an external control unit, such as a PLC or another controller, which controls the working sequence. Specifically, when a nut falls into the receiving seat assembly 1, the controller activates the push rod 302 to push the nut outward while simultaneously energizing the first coil 203. This creates a magnetic field that attracts the nut to the top of the push rod 302.

As the push rod 302 extends beyond the receiving seat assembly 1, the first coil 203 remains energized to maintain the attractive force. Once the push rod 302 approaches the target delivery position, the first coil 203 is de-energized, and the second coil 204 is then energized. The second coil 204 generates a magnetic field opposite to that of the first coil 203, actively repelling the nut and accurately delivering it to the target position, while also retracting the push rod 302.

During this process, the opposing magnetic field generated by the second coil 204 not only assists in nut delivery but also demagnetizes the push rod 302. This compensates for the magnetization that occurs when the push rod 302 passes through the first coil 203 during extension. Without this demagnetization, long-term operation could lead to residual magnetism in the push rod, affecting delivery performance and accelerating component aging.

By utilizing electromagnetic force to attract metal nuts, the invention overcomes the limitations of traditional systems that rely solely on cylinder 4 propulsion and inertia. It significantly improves the accuracy of nut placement at the target position and effectively solves the issue where nuts in traditional systems often fail to reach their intended location.

By utilizing the cooperation of the dual electromagnetic coils and the push rod, the present solution not only overcomes the limitations of existing systems where the nut is ejected solely by an push rod without electromagnetic assistance-resulting in vulnerability to external forces or instabilities (e.g., when the air pressure of the cylinder is unstable, leaking, or when there are defects in the cylinder or its accessories causing variations in thrust or speed), but also enhances delivery precision. In conventional systems, any variation in the cylinder's pushing force or speed may result in unstable motion of the push rod (or delivery rod), preventing the nut from accurately reaching its target location.

Moreover, systems utilizing a single push rod or a single magnetic structure generally rely on the nut's inertia and are thus limited to relatively flat operational environments. For example, when the output end of the feeding gun faces downward or is angled steeply downward, nuts delivered to the receiving seat assembly 1 may fall prematurely due to gravity. In contrast, the present invention ensures that the nut remains magnetically attracted even after exiting the receiving seat assembly 1. When approaching the target position, the magnetic field is reversed, and under the influence of a repelling magnetic force, the nut is precisely pushed into the designated location. This design is independent of the orientation of the equipment and is not affected by fluctuations in the cylinder's pushing force or speed.

Additionally, by demagnetizing the push rod 302 after each cycle, the risk of magnetic retention is reduced, significantly extending the service life of the component.

It should be noted that the present invention is applicable to nuts made of magnetically susceptible materials, such as iron or silicon steel, and is not suitable for non-magnetic materials like aluminum. By employing opposing magnetic fields from two electromagnetic coils, in conjunction with the mechanical thrust from the cylinder 4, the invention resolves timing issues associated with conventional nut guns that rely solely on inertia or passive single-coil (electromagnetic or permanent magnetic) attraction. Unlike such systems, which passively attract nuts, the invention actively applies a controlled electromagnetic force to the nut.

As the nut is delivered by the push rod, the magnetic attraction shifts dynamically, guiding the nut along the desired path. This mitigates issues such as premature detachment, insufficient magnetic release, and inaccurate delivery caused by inertia. Not only does the nut maintain proper orientation after release, but the magnetic guidance throughout the process prevents misalignment or detachment due to instability.

By leveraging the combined effect of electromagnetic force and the mechanical thrust from the cylinder 4, the nut can be precisely positioned when the push rod 302 reaches its endpoint. The subsequent reversal of the magnetic field ensures accurate release of the nut.

It is further noted that, as a metallic component, the nut becomes part of the electromagnetic field when situated inside the energized electromagnetic coil. In systems with only one coil, both the push rod 302 and the nut share the same coil space and thus form a single magnetic core. In the present invention, however, the dual-coil configuration places the push rod 302 and the nut within separate, parallel coils. As the push rod 302 is a continuous structure, this effectively forms two independent electromagnets, allowing finer control over magnetic behavior.

Lastly, it is emphasized that the term "opposing magnetic fields" refers to opposite field directions, not opposite magnetic poles. For instance, placing two S poles or two N poles of magnets face to face results in opposing magnetic field directions even though the poles are the same. The working principles of the relays, transistors, and other control elements mentioned herein are well-known in the art and are not elaborated further.

In one embodiment of the present application, the connector assembly 2 is internally provided with an electromagnetic coil and a wear-resistant copper sleeve 202. The hollow wear-resistant copper sleeve is located on the side of the receiving seat assembly 1. The electromagnetic coil comprises a first coil 203 and a second coil 204 arranged side by side, both being electromagnetic coils of identical specifications.

The push rod 302, at least at its top portion, is made of a material with low coercivity, and the outer diameter of its top portion is not greater than the inner diameter of the nut to be conveyed. This allows the nut to fit onto the top portion of the push rod 302, enabling more stable and controlled delivery. For example, soft iron, which has a high magnetic permeability, is suitable as a magnetic core material. Materials with low coercivity can be quickly demagnetized once the external magnetic field is removed. Typical soft magnetic materials include pure iron, low-carbon steel, and silicon steel. In one embodiment, the coercivity is less than or equal to 300 kA/m.

Furthermore, within the connector assembly 2, the wear-resistant copper sleeve 202 is positioned between the electromagnetic coil and the receiving seat assembly 1. The copper sleeve 202 helps reduce frictional wear between the coil and the receiving seat assembly, thereby extending the service life of the device. Additionally, it optimizes the electromagnetic conduction path and enhances the magnetic force for nut attraction and delivery, promoting higher accuracy in positioning the nut at its target location.

It is noted that although copper does not block magnetic fields, it can attenuate their strength. When the electromagnetic coil is energized, a magnetic field remains present at the location of the copper sleeve 202. As the push rod 302 passes through the sleeve, free electrons in the copper are influenced by the magnetic field, inducing an electric current. This induced current generates an opposing magnetic field, which counteracts the original magnetic field. Consequently, during the nut delivery process, the interaction between the copper sleeve 202 and the coil creates mutually offsetting magnetic fields, effectively reducing the overall magnetic field strength and preventing excessive magnetic force from interfering with nut delivery.

In another embodiment, the outer side of the connector assembly 2 is equipped with a wiring box 201. The electrodes of the first coil 203 and the second coil 204 extend into the wiring box 201, which facilitates centralized management and organized wiring of the coil terminals. This design reduces the risk of short circuits or signal instability caused by external interference, simplifies equipment maintenance, and ensures stability and accuracy during the nut delivery process.

In another embodiment, the outer periphery of the push rod assembly 3 is sleeved with a rotatable adjustable gun support 5. This support is used to mount and fix the electromagnetic nut feeding gun. By rotating and adjusting the gun support 5, the direction of the gun can be axially aligned, allowing the receiving seat assembly 1 to be positioned at an optimal receiving and feeding orientation. This adjustability improves the device's adaptability to various working conditions and enhances installation efficiency in complex spatial environments.

Furthermore, a material tube bracket 6 is positioned between the push rod assembly 3 and the cylinder 4. The bracket 6 provides support to both components and is rotatably adjustable. With an adjustable and stable connection, the bracket 6 disperses stress between the push rod and cylinder, reduces vibrational deviation, and improves operational stability during extended work cycles.

In one embodiment, a cylinder buffer sleeve 401 is disposed inside the push rod assembly 3 at the junction with the cylinder 4. Additionally, within the push rod assembly 3, a push rod buffer sleeve 303 is sleeved onto the push rod 302. The cylinder buffer sleeve 401 and the push rod buffer sleeve 303 are designed to absorb the instantaneous impact generated by the reciprocating motion of the cylinder piston and the push rod 302. These components effectively reduce mechanical fatigue and wear, ensuring consistent precision during highfrequency delivery operations.

In one embodiment of the present application, the receiving seat assembly 1 is provided, at its front end, with a blocking door 101. A return spring (not shown in the drawing) is connected to the blocking door 101. The electromagnetic coils prevent nut bouncing under impact forces. The blocking door 101 prevents the nut from flipping or misalignment during delivery. In cooperation with the receiving seat assembly 1, the blocking door 101 restricts the nut from rotating or shifting within the receiving area, ensuring that the nut can be accurately delivered to the target position.

The return spring attached to the blocking door 101 enables it to quickly reset after the nut is delivered, maintaining structural stability within the equipment and ensuring the continuity of the feeding process. This prevents anomalies in nut delivery paths caused by blocking door malfunction. It also avoids secondary displacement or foreign object intrusion caused by delayed closing of the door, thereby enhancing the reliability of each delivery cycle.

Advantages of the present application are as follows: through the extension of the push rod driven by the cylinder 4, the first electromagnetic coil 203 is energized to attract the nut via electromagnetic force. Once the nut reaches the target position, the first coil 203 is de-energized, and the second electromagnetic coil 204 is energized to actively and accurately eject the nut through a reverse magnetic field. This addresses issues in conventional nut feeding guns that rely solely on the push rod of the cylinder 4 and inertia, often causing inaccurate nut placement.

It also solves problems associated with single-coil magnetic nut feeding guns, which cannot actively demagnetize the push rod. This can lead to permanent magnetization of the rod and nut retraction when encountering magnetically repulsive workpieces.

The invention further improves delivery angle flexibility and speed. Nuts can be accurately delivered at angles from 0 to 90 degrees, or even at 0°, whereas conventional systems are typically limited to 35-70°. This capability is critical for the stable operation of robotic nut welding stations.

When applied in manual assembly lines, it allows for maximum-speed delivery, improving overall production efficiency. Multiple magnetic sensors (1-N) may also be added to the cylinder 4 for safe delivery assurance, preventing damage to the push rod in case of cylinder malfunction.

Each embodiment described in this specification progressively emphasizes differences from other embodiments. Shared or similar features between embodiments may be crossreferenced as needed.

Although preferred embodiments of the present invention have been described, those skilled in the art will understand that variations and modifications may be made without departing from the underlying inventive concept. Therefore, the appended claims are intended to encompass both the preferred embodiments and any modifications or equivalents falling within the scope of the invention.

Lastly, it should be noted that relational terms such as "first" and "second" are used merely to distinguish one entity or operation from another and do not imply any actual order or relationship unless explicitly stated.

Moreover, the terms "comprises," "includes," and any variants thereof are intended to be non-exclusive, such that a process, method, article, or apparatus that comprises a list of elements is not limited to only those elements, but may include other elements not expressly listed or inherent to such process, method, article, or apparatus.

The above has provided a detailed description of an electromagnetic nut feeding gun in accordance with the present invention. Specific examples have been used to explain the principles and implementations of the invention. These embodiments are intended to aid understanding of the invention and its core concepts, and should not be construed as limiting the scope of the invention. Variations and adaptations based on the inventive concept may be made by those skilled in the art without departing from the essence of the invention.

## Claims

1. An electromagnetic nut feeding gun, comprising:
a receiving seat assembly, with a rear end connected to a connector assembly;
the connector assembly having a first coil and a second coil arranged side by side therein, wherein the first coil and the second coil generate opposite magnetic fields when energized;
a push rod assembly connected to a rear end of the connector assembly, the push rod assembly comprising a push rod protective sleeve and a push rod disposed therein;
a cylinder connected to a rear end of the push rod assembly, a piston of the cylinder being connected to the push rod such that a top end of the push rod is extendable to a position outside the receiving seat assembly;
wherein the push rod passes through a magnetic field formed by the first coil and the second coil during its reciprocating movement.

2. The electromagnetic nut feeding gun according to claim 1, wherein the first coil and the second coil are electromagnetic coils of the same specification; and
wherein at least a top portion of the push rod is made of a material with a coercivity less than or equal to 300 kA/m, and an outer diameter of the top portion of the push rod is not greater than an inner diameter of a nut to be delivered.

3. The electromagnetic nut feeding gun according to claim 2, wherein a wear-resistant copper sleeve is disposed inside the connector assembly between the electromagnetic coils and the receiving seat assembly.

4. The electromagnetic nut feeding gun according to claim 2, wherein a wiring box is disposed on an outer side of the connector assembly, and electrodes of the first coil and the second coil extend into the wiring box.

5. The electromagnetic nut feeding gun according to claim 1, wherein a rotatably adjustable gun support is sleeved around an outer periphery of the push rod assembly.

6. The electromagnetic nut feeding gun according to claim 1, wherein a material tube bracket is disposed between the push rod assembly and the cylinder.

7. The electromagnetic nut feeding gun according to claim 6, wherein a cylinder buffer sleeve is provided at a connection portion between the cylinder and the push rod assembly and is disposed inside the push rod assembly.

8. The electromagnetic nut feeding gun according to claim 1, wherein a front end of the receiving seat assembly is provided with a blocking door; and
wherein a return spring is connected to the blocking door.
